# EUROPÄISCHE PATENTSCHRIFT

(11) **EP 4 655 075 B1**
(45) Veröffentlichungstag und Bekanntmachung des Hinweises auf die Patenterteilung: **02.12.2026**
(21) Anmeldenummer: 24701422.8
(22) Anmeldetag: 22.01.2024
(51) Int. Cl.: A62B 23/04, A62B 29/00, A62B 31/00, F24F 8/10, F24F 8/95, B01D 46/42, B01D 46/44, B01D 46/00, B01D 46/62, B01D 46/88, B01D 50/20, F24F 110/52, F24F 110/65

(54) **MOBILE LUFTFILTERANLAGE FÜR KONTAMINATIONSSTOFFE**
MOBILE AIR FILTER SYSTEM FOR CONTAMINANTS
SYSTÈME DE FILTRE À AIR MOBILE POUR CONTAMINANTS

(30) Priorität: 24.01.2023 DE 202023100333 U
(43) Veröffentlichungstag der Anmeldung: 03.12.2025
(73) Patentinhaber: etna GmbH, 60528 Frankfurt am Main (DE)
(72) Erfinder: BARTHEL, Stefan, 63477 Maintal (DE); POHL, Sebastian Tobias, 63477 Maintal (DE)
(74) Vertreter: WSL Patentanwälte Partnerschaft mbB
(86) Internationale Anmeldenummer: PCT/EP2024/051426
(87) Internationale Veröffentlichungsnummer: WO 2024/156661

(56) Entgegenhaltungen:
- CN-A- 107 252 594
- IT-A1- 202100 000 425
- US-A1- 2004 144 104
- US-A1- 2022 184 541
- US-A1- 2022 203 288
- US-B2- 11 493 216
- US-B2- 9 375 670

## Beschreibung

Die vorliegende Erfindung betrifft eine mobile Luftfilteranlage zu Erzeugung von gereinigter Luft durch Entfernung von Luftverunreinigungen, wobei die Luftfilteranlage ein Gehäuse und ein in dem Gehäuse angeordnetes Filtersystem aufweist, wobei im Gehäuse ein mit dem Filtersystem verbundener Lufteinlass und ein mit dem Filtersystem verbundener Luftauslass für die gereinigte Luft vorgesehen ist.

Für Zwecke der aktiven Belüftung von Räumen mit gereinigter Luft gibt es zahlreiche verschiedene in oder an Gebäuden montierte Lüftungssysteme, die ein Filterelement enthalten, um beispielsweise in der Umgebungsluft enthaltene Staubpartikel herauszufiltern. Für die Belüftung von Festzelten etc. gibt es auch entsprechende Systeme, die mobil sind und je nach Bedarf zum Einsatzort transportiert werden können.

Solche mobilen Systeme kommen zum Teil auch zur Belüftung von militärischen Einrichtungen, wie z.B. Feldlagern oder Feldlazaretten zum Einsatz. Bisher sind aus dem Stand der Technik jedoch keine mobilen Luftfilteranlagen für militärische Einsatzzwecke bekannt, die neben der Entfernung von üblichen partikulären Luftverunreinigungen, wie z.B. Staubpartikeln, Pollen, etc. im Bedarfsfall auch die Entfernung von in der Umgebungsluft befindlichen Kampfstoffen, insbesondere von biologischen Kampfstoffen, chemischen Kampfstoffen und/oder radioaktiven Substanzen (sogenannte "ABC-Kampfstoffe"), gewährleisten.

Unter dem Begriff "Kampfstoff" werden hier Stoffe oder Substanzen verstanden, die dazu geeignet sind, Menschen vorübergehend kampf- bzw. handlungsunfähig zu machen oder zu töten, wenn sie mit einem über einem Grenzwert liegenden Anteil in der Umgebungsluft enthalten sind. Hierunter fallen im Sinne der vorliegenden Erfindung insbesondere biologische Kampfstoffe, chemische Kampfstoffe und/oder radioaktive Substanzen (sogenannte "ABC-Kampfstoffe").

Chemische Kampfstoffe, die über die Luft verbreitet werden können, sind typischerweise gasförmige oder tröpchenförmig vernebelte chemische Substanzen oder Gemische davon. Unter biologischen Kampfstoffen werden hier pathogene Keime oder natürliche Toxine, die über die Luft verbreitet werden können, verstanden. Unter radioaktiven Substanzen werden hier durch Kernspaltung entstandene Partikel in der Luft, die eine für Menschen toxische Radioaktivität haben, verstanden.

Die vorliegende Erfindung betrifft allerdings nicht nur militärische Anwendungen, bei denen die Entfernung von Kampfstoffen von höchster Bedeutung ist, sondern auch zivile Anwendungen, bei denen es allgemein um die Entfernung von gesundheitsschädlichen Kontaminationsstoffen geht, wobei unter dem Begriff "gesundheitsschädliche Kontaminationsstoffe" hier allgemein Stoffe oder Substanzen verstanden werden, die dazu geeignet sind, den Gesundheitszustand von Menschen vorübergehend oder dauerhaft zu beeinträchtigen, wenn sie mit einem über einem Grenzwert liegenden Anteil in der Luft enthalten sind. Hierunter fallen im Sinne der vorliegenden Erfindung insbesondere biologische Kontaminationsstoffe, chemische Kontaminationsstoffe und radioaktive Substanzen.

Es besteht daher ein Bedarf nach einer mobilen Luftfilteranlage, die neben der Entfernung von üblichen Luftverunreinigungen auch effektiven Schutz vor in der Umgebungsluft befindlichen Kontaminationsstoffen bietet. Vorzugsweise ist eine solche mobile Luftfilteranlage auch für die Entfernung von gesundheitsschädlichen Luftkontaminationen aus der Raumluft in kontaminierten Räumen geeignet.

CN 107 252 594 A beschreibt eine Luftfiltervorrichtung mit einem Einlasskanal, einem Auslasskanal I und einem Auslasskanal II, wobei der Einlasskanal mit einer Luftklappe I am Auslasskanal I und einer Luftklappe II am Auslasskanal II versehen ist. Die Luftfiltervorrichtung ist in der Lage, die verschiedenen Bestandteile in der Luft mithilfe einer Detektionsvorrichtung zu erkennen und über die verschiedenen Kanäle zu verarbeiten.

US 2022/203288 A1 beschreibt Systeme zur Steuerung eines Heizungs-, Lüftungs-, Klima- und Kältesystems und eines Luftreinigers, wobei wenigstens ein Luftqualitätsparameter über einen Sensor erfasst wird.

US 11493216 B2 beschreibt ein Luftfiltersystem mit einem Lufteinlass, einer ersten Filterstufe, einer zweiten Filterstufe, einem Modul zum Erfassen der Luftqualität und einem Steuermodul, wobei das Steuermodul einen Betriebszustand der ersten Filterstufe und/oder der zweiten Filterstufe auf der Grundlage der erfassten Luftqualität anpasst.

IT 2021 0000 0425 A1 beschreibt ein Luftfiltersystem zum Filtern von Krankheitserregern und Staub unter Verwendung einer Vielzahl von Systemen wie z.B. Infraschallgeneratorsystem, UV-Lampen, Infrarotstrahler, Lamellenheizung, Partikelsensoren und Thermoelemente.Gemäß der vorliegenden Erfindung wird eine mobile Luftfilteranlage der eingangs erwähnten Art vorgeschlagen, die dadurch gekennzeichnet ist, dass
▪ das Filtersystem aus wenigstens zwei über eine Leitung miteinander verbundenen Filterkomponenten besteht, wobei die erste Filterkomponente ein konventioneller Filter zur Entfernung von üblichen Luftverunreinigungen ist und die zweite Filterkomponente ein Filter zur Entfernung von gesundheitsschädlichen Kontaminationsstoffen ist,
▪ in der Leitung zwischen der ersten Filterkomponente und der zweiten Filterkomponente eine Luftstromweiche angeordnet ist, die eine erste Weichenstellung einnehmen kann, in der die von der ersten Filterkomponente gereinigte Luft direkt zu dem Luftauslass geleitet wird, und die eine zweite Weichenstellung einnehmen kann, in der die von der ersten Filterkomponente gereinigte Luft über die zweite Filterkomponente zum Luftauslass geleitet wird, und
▪ die Luftfilteranlage einen Detektor zur Detektion von in der Luft befindlichen gesundheitsschädlichen Kontaminationsstoffen aufweist, wobei der Detektor dann, wenn in der Luft ein Kontaminationsstoff, vorliegt, ein Signal erzeugt, dass die Luftstromweiche dazu veranlasst, die zweite Weichenstellung einzunehmen, sodass die von der ersten Filterkomponente gereinigte Luft durch die zweite Filterkomponente zum Luftauslass geleitet wird.

Die mobile Luftfilteranlage der vorliegenden Erfindung umfasst ein mehrstufiges Filtersystem, welches zwei Betriebszustände ermöglicht, einen Normalbetrieb und einen Schutzbetrieb. Zwischen diesen beiden Betriebsmodi kann dadurch gewechselt werden, dass im Bedarfsfall die zwischen der ersten Filterkomponente und der zweiten Filterkomponente angeordnete Luftstromweiche so geschaltet wird, dass die von der ersten Filterkomponente gereinigte Luft über die zweite Filterkomponente zum Luftauslass geleitet wird, sodass auch in der Luft befindliche gesundheitsschädliche Kontaminationsstoffen herausgefiltert werden können.

Im Normalbetrieb strömt die Luft durch den im Gehäuse vorgesehenen Lufteinlass und wird über eine erste Leitung zwischen Lufteinlass und erster Filterkomponente in die erste Filterkomponente geleitet. Nachdem der Luftstrom die erste Filterkomponente passiert hat, wird die entsprechend konventionell gereinigte Luft über eine zweite Leitung zwischen erster Filterkomponente und den im Gehäuse vorgesehenen Luftauslass nach außen befördert. An der zweiten Leitung zwischen erster Filterkomponente und dem im Gehäuse vorgesehenen Luftauslass ist eine Luftstromweiche angeordnet, die im Normalbetrieb, d.h., wenn der Detektor keine gesundheitsschädlichen Kontaminationsstoffe in der Luft detektiert, den Luftstrom zu 100 % in Richtung Luftauslass leitet, um dort für die jeweilige Belüftungsanwendung bereitgestellt zu werden.

Im Schutzbetrieb, d.h., wenn der Detektor wenigstens einen gesundheitsschädlichen Kontaminationsstoff in der Luft detektiert, schaltet die Luftstromweiche um und leitet dann den Luftstrom zu 100 % über eine dritte Leitung in die zweite Filterkomponente, damit diese den detektierten Kontaminationsstoff entfernt. Nachdem der Luftstrom die zweite Filterkomponente passiert hat, wird die entsprechend gereinigte Luft über eine vierte Leitung zwischen zweiter Filterkomponente und den im Gehäuse vorgesehenen Luftauslass nach außen befördert, um dort für die jeweilige Belüftungsanwendung bereitgestellt zu werden. Sobald der Detektor in der Luft keine Kontaminationsstoffe mehr detektiert, ist die Gefahrensituation überstanden. Je nachdem, um welchen Kontaminationsstoff es sich gehandelt hat und wie lange die Gefahrensituation bestand, kann die Luftstromweiche gegebenenfalls direkt wieder auf Normalbetrieb geschaltet werden. In den meisten Fällen erfordert das Zurückschalten auf Normalbetrieb allerdings eine vorherige Dekontamination des Systems, v.a. wenn zu befürchten ist, dass sich noch Rückstände des Kontaminationsstoffes an den inneren Oberflächen der Anlage befinden, die mit kontaminierter Luft in Kontakt kamen.

Die vorliegende Erfindung stellt somit ein mobiles und intelligentes Filtersystem zur unterbrechungsfreien Belüftung einer militärischen aber auch zivilen Errichtung in potentiellen Gefahrensituationen bereit. Zur Schonung des Filtersystems für gesundheitsschädliche Kontaminationsstoffe, wird die zu reinigende Luft nur dann über das Kontaminationsstofffiltersystem geleitet, wenn dies tatsächlich erforderlich ist. Hierfür ist erfindungsgemäß ein Kontaminationsstoffdetektor vorgesehen, der nur im Bedarfsfall über das Umschaltelement "Luftstromweiche" die vom konventionellen Filtersystem bereits vorgereinigte Luft durch das Dekontaminations-Filtersystem leitet.

Der Begriff "unterbrechungsfreies Belüften" ist hier so zu verstehen, dass die Umschaltzeit zwischen der konventionellen Luftreinigung und der kombinierten konventionellen/Kontaminationsstoff-Luftreinigung innerhalb von wenigen Sekunden erfolgt, vorzugsweise innerhalb von weniger als 10 Sekunden, noch bevorzugter innerhalb von weniger als 5 Sekunden und am bevorzugtesten innerhalb von weniger als 3 Sekunden nachdem eine mit eine kontaminierte Fraktion des Luftstromes den Lufteinlass passiert hat. Entscheidend ist dabei, dass die Umschaltung automatisch erfolgt, d.h. ohne manuelles Eingreifen eines Betreibers. Das System der erfindungsgemäßen Luftfilteranlage arbeitet insofern stets autark und zuverlässig zum rechten Zeitpunkt.

Um sicherzustellen, dass bereits in die Filteranlage eingeströmte kontaminierte Luftüber die Dekontaminations-Filterkomponenten geleitet wird, sind bei manchen Ausführungsformen entweder zwischen dem Lufteinlass und der konventionellen Filterkomponente und/oder zwischen der konventionellen Filterkomponente und der Luftstromweiche eine oder mehrere Umlenkschleifen in der Luftleitung vorgesehen, die den jeweiligen Leitungsabschnitt verlängern und damit auch die Verweilzeit des Luftstroms im jeweiligen Leitungsabschnitt vergrößern, damit eine vom Detektor als kontaminiert identifizierte Fraktion des Luftstromes, die den Lufteinlass schon passiert hat, noch rechtzeitig auf die zweite Filterkomponente gelenkt werden kann.

Vorzugsweise verlängern die eine oder die mehreren Umlenkschleifen in der Luftleitung die Dauer, die der Luftstrom vom Lufteinlass bis zur Luftstromweiche benötigt, um wenigstens 3 Sekunden, vorzugsweise um wenigstens 5 Sekunden, noch bevorzugter um wenigstens 10 Sekunden. Je nach Größe und Kapazität der Anlage kann die Länger der Umlenkschleife bzw. die Gesamtlänge mehrere Umlenkschleifen zusammengenommen variieren. Bei manchen Ausführungsformen der Erfindung beträgt die Länge wenigstens 1 m, wenigstens 2 m oder wenigstens 3 m.

Entscheidend für die Zuverlässigkeit des Systems ist, dass die Luftstromweiche dazu geeignet ist, im Schutzbetrieb eine vollständige Umleitung des Luftstroms in die zweite Filterkomponente zu gewährleisten. Die Luftstromweiche muss insbesondere so eingerichtet sein, dass im Schutzbetrieb keine von der ersten Filterkomponente lediglich konventionell gereinigte Luft über die zweite Leitung zwischen erster Filterkomponente und den im Gehäuse vorgesehenen Luftauslass nach außen befördert wird, um sicherzustellen, dass auf diesem Wege kein in der Luft detektierter Kontaminationsstoff in den für die jeweilige Anwendung bereitgestellten Luftstrom gelangt.

Dementsprechend müssen alle Leitungen zwischen Lufteinlass und erster Filterkomponente, zwischen erster Filterkomponente und Luftstromweiche, zwischen Luftsstromweiche und Luftauslass, zwischen Luftstromweiche und zweiter Filterkomponente und zwischen zweiter Filterkomponente und Luftauslass sowie alle Verbindungen zwischen den Leitungen auf der einen Seite und den Filterkomponenten bzw. der Luftstromweiche auf der anderen Seite absolut luftdicht sein, sodass keine Luft aus einer der Leitungen bzw. Komponenten entweichen kann und auch keine Luft dorthin eindringen kann.

Der Luftstrom durch das Filtersystem kann entweder durch eine externe Pumpe erzeugt werden, die Luft zum Einlass der Anlage befördert, oder durch ein System, das am Luftauslass der Anlage gereinigte Luft ansaugt. Um den Luftstrom durch das Filtersystem zu forcieren, ist jedoch vorzugsweise am Lufteinlass und/oder in den Leitungen zwischen den Filterkomponenten wenigstens ein Ventilator vorgesehen, damit der Luftstrom von der Filteranlage autark erzeugt und auch gesteuert werden kann.

Erfindungsgemäß wird der Bedarfsfall durch einen Detektor zur Detektion der herauszufilternden gesundheitsschädlichen Kontaminationsstoffe ermittelt, wobei der Detektor dann, wenn ein Kontaminationsstoff detektiert wird, ein Signal erzeugt, dass die Luftstromweiche dazu veranlasst, die von der ersten Filterkomponente gereinigte Luft durch die zweite Filterkomponente zum Luftauslass zu leiten.

Die erfindungsgemäße mobile Luftfilteranlage kann sowohl zur Dekontamination von Umgebungsluft, beispielsweise durch Entfernung von Kampfstoffen, eingesetzt werden als auch zur Reinigung von kontaminierter Raumluft, z.B. im septischen Bereich eines Feldlazaretts. Der Begriff "Raumluft" ist in diesem Zusammenhang so zu verstehen, dass es sich hierbei um die in einem geschlossenen Raum, wie zum Beispiel in einem Gebäude, befindliche Luft handelt, während "Umgebungsluft" die Luft ist, die sich außerhalb geschlossener Räume im freien Austausch mit der Atmosphäre befindet.

Bei den Ausführungsformen, die für die Dekontamination der Umgebungsluft bestimmt sind, kann der erfindungsgemäß erforderliche Detektor zur Detektion von in der Umgebungsluft befindlichen Kontaminationsstoffen bei bestimmten Ausführungsformen nur zur Detektion eines biologischen Kontaminationsstoffs oder eines chemischen Kontaminationsstoffs oder einer radioaktiven Substanz eingerichtet sein. Vorzugsweise ist der erfindungsgemäß eingesetzte Detektor zur Detektion von Kontaminationsstoffen aus wenigstens zwei der Kontaminationsstoffkategorien "biologischer Kontaminationsstoff", "chemischer Kontaminationsstoff" oder "radioaktive Substanz" eingerichtet. Bei bestimmten Ausführungsformen ist der Detektor für die Detektion von Kontaminationsstoffen aus allen drei genannten Kontaminationsstoffkategorien geeignet.

Der erfindungsgemäß erforderliche Detektor zur Detektion von in der Luft befindlichen gesundheitsschädlichen Kontaminationsstoffen kann insbesondere eine oder mehrere der folgenden Detektor-Funktionalitäten aufweisen: Ionen-Mobilitäts-Spektrometer, Photoionisationsdetektor, Elektroneneinfangdetektor, Gasdetektor mit Metalloxid-Halbleiter-Technologie, Strahlungsdetektor für radioaktive Strahlung, Teilchendetektor für radioaktive Teilchen, DNA-Chip mit einem oder mehreren DNA-Fragmenten eines oder mehrerer pathogener Keime, Biosensor mit einem oder mehreren Antikörpern gegen einen oder mehrere pathogene Keime.

Der Detektor für die Erfassung der Kontaminationsstoffe ist bei manchen Ausführungsformen der vorliegenden Erfindung zwischen dem Lufteinlassgehäuse und der ersten Filterkomponente angeordnet. Bei anderen Ausführungsformen ist der Detektor auf der Außenseite des Gehäuses an der Luftfilteranlage montiert. Bei weiteren Ausführungsformen kann der Detektor auch an einem anderen Ort in einem Abstand vom Gehäuse angeordnet sein, beispielsweise in einem Abstand von wenigstens 5 m, wenigstens 10 m oder wenigstens 25 m und in einem Abstand von bis zu 100 m, bis zu 250 m oder gar bis zu 500 m.

Bei besonderen Ausführungsformen der Erfindung sind mehrere erfindungsgemäße Filteranlagen dahingehend miteinander vernetzt, das nicht alle zwingend einen eigenen Detektor aufweisen müssen sondern zumindest teilweise auch einen gemeinsamen Detektor haben können, der entweder in oder an einer der Anlagen angeordnet ist oder separat in einem Abstand von der eigentlichen Filteranlage an einem eigenen Standort aufgebaut ist. Wird von einem gemeinsamen Detektor oder einem von mehreren vorgesehenen Detektoren ein gesundheitsschädlicher Kontaminationsstoff erfasst, werden aufgrund des von dem Detektor ausgesendeten Signals alle miteinander vernetzten Filteranlagen auf Schutzbetrieb umgeschaltet.

Die Übertragung des Signals, dass vom Detektor erzeugt wird, um die Luftstromweiche zu schalten, kann über ein Kabel oder kabellos übertragen werden. Insbesondere bei den Ausführungsformen, bei denen der Detektor in einem Abstand zu Luftfilteranlage angeordnet ist sind Detektor und Luftfilteranlage vorzugsweise kabellos verbunden, beispielsweise über ein WLAN-Netzwerk, per Bluetooth, über ein Mobilfunknetz (z.B. LTE, 5G) oder über ein anderes Datenfunknetz verbunden.

Bei manchen Ausführungsformen sind die verschiedenen Detektor-Funktionalitäten in einem gemeinsamen Detektorkomplex angeordnet. Bei anderen Ausführungsformen sind die die verschiedenen Funktionalitäten auf zwei oder mehr separate Detektoruntereinheiten verteilt, die im oder am Gehäuse oder in einem Abstand vom Gehäuse angeordnet sind.

Als zusätzliche Absicherung ist bei bestimmten Ausführungsformen der Erfindung zusätzlich zum ersten Detektor für die Detektion von Kontaminationsstoffen ein zweiter, vorzugsweise mit denselben Funktionalitäten ausgestatteter Detektor als Redundanz für einen möglichen vorübergehenden Ausfall des ersten Detektors vorgesehen.

In der erfindungsgemäßen Luftfilteranlage können die verschiedensten Filterkomponenten, die den jeweiligen Anforderungen gerecht werden, vorgesehen sein. Bei bestimmten Ausführungsformen weist wenigstens eine der Filterkomponenten ein hohlzylindrisches Filtergehäuse mit einem inneren gasdurchlässigen Zylindermantel und einem äußeren gasdurchlässigen Zylindermantel auf, wobei über einen der beiden Zylindermäntel die zu reinigende Luft in die Filterkomponente einströmt und über den anderen Zylindermantel die gereinigte Luft aus der Filterkomponente ausströmt und optional können zusätzlich weitere zylindrische Trennwände vorgesehen sein, welche den Raum zwischen dem inneren und äußeren Zylindermantel in konzentrische, hohlzylindrische Kammern zur Aufnahme von Filtermaterial aufteilen.

Unabhängig von Konstruktion und Gestalt der Filterkomponenten kommen als Filtermaterialien je nach Filteraufgabe verschiedene Filtermaterialien in Betracht. Als Filtermaterial für den konventionellen Filter zum Filtern von üblichen Lufterverunreinigungen und als Filtermaterial zum Filtern von typischerweise partikulär gebundenen radioaktiven Kontaminationsstoffen oder biologischen Kontaminationsstoffen, wie z.B. Bakterien, Viren und Sporen von Bakterien, sind Schwebstofffilter geeignet. Zum Filtern von chemischen Kontaminationsstoffen sind beispielsweise Adsorptionsfilter geeignet, wie z.B. Aktivkohlefilter.

Als Schwebstofffilter sind Materialien geeignet, die in der Luft befindliche Schwebstoffpartikel mechanisch herausfiltern können. Für den Einsatz im konventionellen Luftfilter sind Schwebstofffilter geeignet, die Schwebstoffpartikel mit einem aerodynamischen Durchmesser von weniger als 100 µm aus der Luft filtern können. Für den Einsatz im Kontaminationsstofffilter sind Schwebstofffilter geeignet, die Schwebstoffpartikel mit einem aerodynamischen Durchmesser von weniger als 10 µm, vorzugsweise sogar weniger als 1 µm, aus der Luft filtern können. Entsprechende Schwebstofffilter bestehen typischerweise aus Glasfasern oder Kunststoffmembranen (z.B. PTFE-Membranen).

Zur Entlastung der ersten Filterkomponente kann es bei manchen Ausführungsformen der Erfindung bevorzugt sein, dass vor dem Lufteinlass oder zwischen dem Lufteinlass und der ersten Filterkomponente ein Staubabscheider und/oder ein Wasserabscheider vorgesehen ist.

Um im Bedarfsfall die im Gehäuse der Luftfilteranlage angeordnete erste bzw. zweite Filterkomponente austauschen zu können, ist bei bestimmten Ausführungsformen der Erfindung wenigstens für eine der beiden Filterkomponenten oder für beide Filterkomponenten jeweils ein Einschubschacht zum Austauschen von darin befindlichen gebrauchten ersten und/oder zweiten Filterkomponenten durch neue erste und/oder zweite Filterkomponenten vorgesehen.

Die in der erfindungsgemäßen Luftfilteranlage verwendeten Filterkomponenten sollen möglichst leicht wechselbar sein. Bei bestimmten Ausführungsformen kann der Wechsel daher werkzeugfrei erfolgen. Hierfür werden vdie Filterkomponenten vorzugsweise über Rändelschrauben oder Handkurbeln in dem Einschubschacht fixiert. Für Zwecke des leichteren Einführens in den Einschubschacht sind dort vorzugsweise Gleitschienen vorgesehen, über die ein leichtes Einschieben der Filterkomponenten in den Einschubschacht möglich ist. Besonders bevorzugt befinden sich an den entsprechenden Filterkomponenten passend geformte Gleitbereiche, die auf den Schienen im Einschubschacht möglichst reibungsfrei gleiten können. Auf diese Weise ist der Wechsel von Filterkomponenten auch unter Vollschutz-Bedingungen möglich.

Alle öffenbaren Gehäuseteile, wie z.B. die Einschubschächte für die Filterkomponenten, sind an den Öffnungen mit Dichtelementen abgekapselt, damit in die Luftfilteranlage - abgesehen von dem über das Filtersystem geleiteten Luftstrom - keine möglicherweise kontaminierte Luft aber auch kein Wasser eindringen kann. Vorzugsweise hält die Abdichtwirkung der Dichtelemente bis zu einem Überdruck von wenigstens 1 x 10⁻⁵ mBar I/s (hinreichend dicht), wenigstens 1 x 10⁻⁶ mBar I/s (sehr dicht) oder gar bis zu wenigstens 1 x 10⁻⁷ mBar l/s (hermetisch gekapselt) stand (Prüfmedium: Helium). Um während dem Transport oder am Standort auftretende Druckunterschiede ausgleichen zu konnen, verfügen alle gekapselten Hohlräume vorzugsweise über Druckausgleichventile.

Bei manchen Ausführungsformen, die für die Dekontamination der Umgebungsluft bestimmt sind, befindet sich der Lufteinlass unmittelbar in einer Außenwand des Gehäuses. Um das Eindringen von Insekten, Blättern, etc. zu verhindern, sind vor dem Lufteinlass vorzugsweise ein Lüftungsgitter oder (verstellbare) Lüftungslamellen vorgesehen. Bei manchen Ausführungsformen kann der Lufteinlass zum Wetterschutz leicht hinter die Gehäusewand rückspringend vorgesehen sein und/oder mit Wetterschutzlamellen ausgestattet sein. Bei alternativen Ausführungsformen ist der Lufteinlass mit einem Schlauch, Lüftungsrohr oder einem Teleskopansaugrohr verbunden, über den/das Luft aus größerer Entfernung oder Höhe angesaugt werden kann. Vorzugsweise beträgt die Länge des Schlauches, Lüftungsrohres oder Teleskopansaugrohres bis zu wenigstens 1 m, wenigstens 3 m, wenigstens 5 m oder wenigstens 10 m.

Bei manchen Ausführungsformen ist im Gehäuse vor dem Lufteinlass eine Vorkammer vorgesehen, in die über eine Öffnung in einer Außenwand des Gehäuses Umgebungsluft einströmen kann. Auch an dieser Öffnung können ein Lüftungsgitter oder (verstellbare) Lüftungslamellen vorgesehen sein, und die Öffnung kann zum Wetterschutz leicht hinter die Gehäusewand rückspringend und/oder mit Wetterschutzlamellen ausgestattet sein. In der Vorkammer kann dann auch der Detektor geschützt angeordnet sein.

Für Zwecke der Mobilität sind vorzugsweise an der Oberseite des Gehäuses Transportösen vorgesehen. An der Unterseite des Gehäuses ist die Luftfilteranlage vorzugsweise auf eine Standardpalette aus Metall montiert, wie z.B. eine Bundeswehrpalette (Stahlflachpalette gemäß technischer Lieferbedingung der Bundeswehr TL 3990-0015).

Um die von der erfindungsgemäßen Luftfilteranlage gereinigte Luft in einen mobilen Aufenthaltsraum, wie z.B. ein Mannschaftszelt oder ein Lazarettzelt einbringen zu können, ist am Luftauslass vorzugsweise ein Anschluss zum Anschließen am Lufteinlass des Aufenthaltsraumes vorgesehen. Von der vorliegenden Erfindung ist somit auch ein mobiler Aufenthaltsraum umfasst, der einen Lufteinlass für Umgebungsluft aufweist, der Lufteinlass mit einem Luftauslass der erfindungsgemäßen Luftfilteranlage verbunden ist.

Des Weiteren ist von der vorliegenden Erfindung ein Verfahren zum Versorgen eines mobilen Aufenthaltsraumes mit gereinigter Luft umfasst, wobei bei dem Verfahren der Lufteinlass des Aufenthaltsraumes mit einem Luftauslass einer erfindungsgemäßen Luftfilteranlage verbunden und die Luftfilteranlage in Betrieb gesetzt wird, sodass diese durch Entfernung von Luftverunreinigungen aus der Umgebungsluft gereinigte Luft erzeugt und diese gereinigte Luft über die Verbindung mit dem Aufenthaltsraum dort bereitstellt.

Für Zwecke der ursprünglichen Offenbarung wird darauf hingewiesen, daß sämtliche Merkmale, wie sie sich aus der vorliegenden Beschreibung, der Zeichnung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass das nachfolgend anhand der anhängenden Figur schematisch dargestellte Ausführungsbeispiel lediglich dazu dient, das Grundprinzip einer möglichen Ausführungsformen der vorliegenden Erfindung beispielhaft anzugeben. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen wird hier nur der Kürze und der Lesbarkeit der Beschreibung wegen verzichtet.

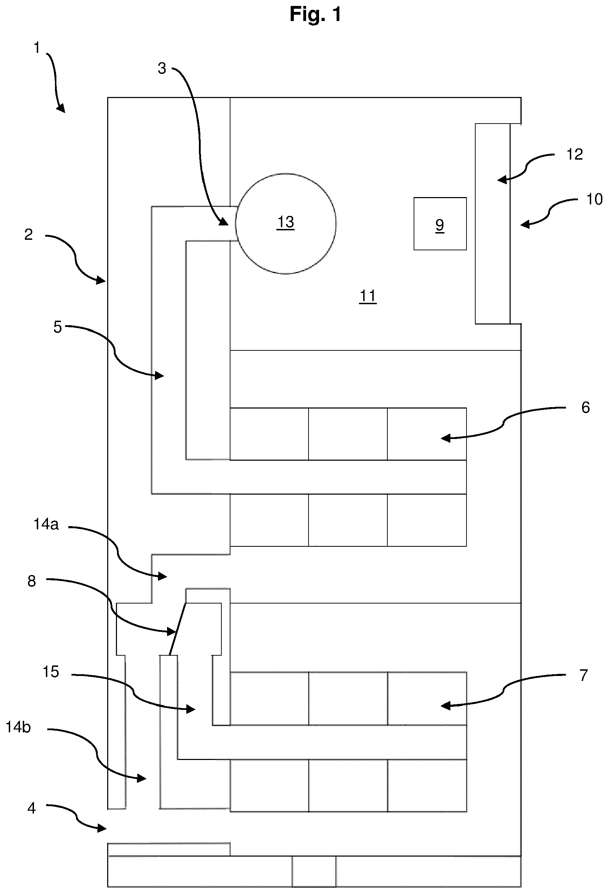

In der anhängenden Figur 1 ist eine Ausführungsform einer mobilen Luftfilteranlage gemäß der vorliegenden Erfindung stark schematisch dargestellt. Dabei sind folgende Merkmale zu erkennen.

Die dargestellte Luftfilteranlage 1 weist ein Gehäuse 2 auf, in dem ein Filtersystem angeordnet ist, das aus einer ersten Filterkomponente 6 (konventioneller Filter) und einer zweiten Filterkomponente 7 (Kontaminationsstofffilter) besteht.

Oben rechts ist in der Seitenwand des Gehäuses 2 eine Lufteinströmöffnung 10 vorgesehen, über die Luft in eine Vorkammer 11 im Gehäuse 2 der Luftfilteranlage 1 einströmen kann. In der Lufteinströmöffnung 10 ist ein Lüftungsgitter 12 angeordnet, um das eindringen von Laub, Insekten, etc. zu verhindern.

In der Vorkammer 11 ist ein Detektor 9 vorgesehen, der so eingerichtet ist, dass er zur Detektion wenigstens eines potentiellen Kontaminationsstoffes eingerichtet ist.

Ein Ventilator 13 erzeugt aus dem in der Vorkammer 11 befindlichen Luftvolumen einen Luftstrom, der durch den Lufteinlass 3 in die erste Leitung 5 strömt. Durch die Leitung 5 gelangt der Luftstrom schließlich in die konventionelle Filterkomponente 6, die hier aus insgesamt 3 aneinanderliegenden Filtereinheiten besteht.

Die in den zentralen Hohlraum der konventionellen Filterkomponente 6 einströmende Luft wird durch das Filtermaterial der Filterkomponente 6 gedrückt und gelangt über den die Filterkomponente 6 umgebenden Raum in einen ersten Abschnitt der zweiten Leitung 14a.

Am Ende des ersten Abschnitts der zweiten Leitung 14a ist eine Luftstromweiche 8 angeordnet, die hier in Figur 1 in Normalbetrieb geschaltet ist, sodass die durch den ersten Abschnitt der zweiten Leitung 14a strömende Luft über den zweiten Abschnitt der zweiten Leitung 14b zum Luftauslass 4 gelangt, wo dann die Bereitstellung für die jeweilige Belüftungsanwendung erfolgt.

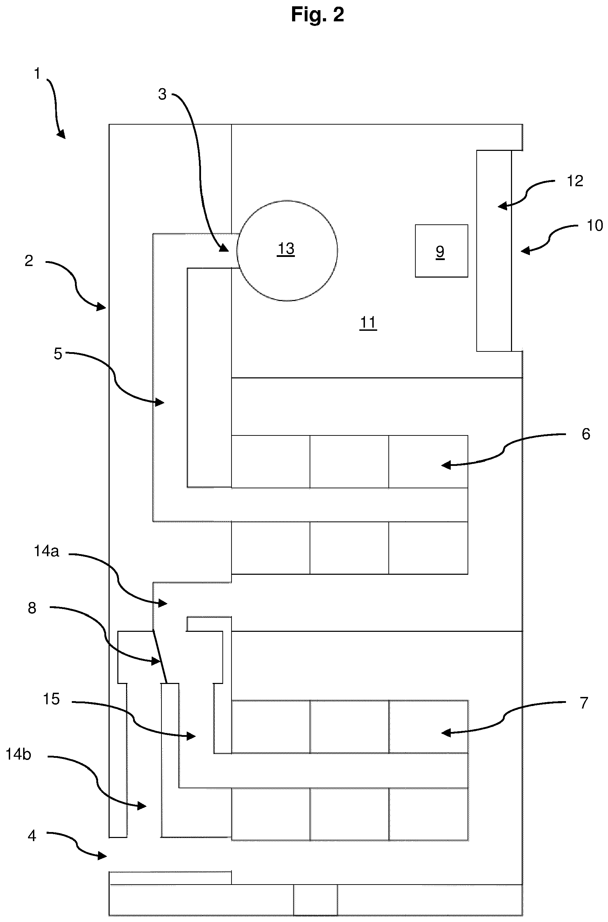

In Figur 2 ist die Weichenstellung der Luftstromweiche in der Position für den Schutzbetrieb. Diese Weichenstellung erfolgt automatisch dann, wenn der Detektor 9 in der Luft, die sich in der Vorkammer 11 befindet einen Kontaminationsstoff detektiert hat. In dieser Weichenstellung wird die durch den ersten Abschnitt der zweiten Leitung 14a strömende Luft über die dritte Leitung 15 in die Dekontaminations-Filterkomponente 7 geleitet wird, die hier auch aus insgesamt 3 aneinanderliegenden Filtereinheiten besteht.

Die in den zentralen Hohlraum der Dekontaminations-Filterkomponente 7 einströmende Luft wird durch das Filtermaterial der Filterkomponente 7 gedrückt und gelangt über den die Filterkomponente 7 umgebenden Raum zum Luftauslass 4, wo dann die Bereitstellung für die jeweilige Belüftungsanwendung erfolgt.

### Bezugszeichenliste

- 1: Luftfilteranlage
- 2: Gehäuse
- 3: Lufteinlass
- 4: Luftauslass
- 5: Leitung
- 6: konventionelle Filterkomponente
- 7: Kontaminationsstoff-Filterkomponente
- 8: Luftstromweiche
- 9: Detektor
- 10: Lufteinströmöffnung
- 11: Vorkammer
- 12: Lüftungsgitter
- 13: Ventilator
- 14a: erster Leitungsabschnitt
- 14b: zweiter Leitungsabschnitt
- 15: Leitung

## Patentansprüche

1. Mobile Luftfilteranlage (1) zur Erzeugung von gereinigter Luft durch Entfernung von Luftverunreinigungen aus der Luft, wobei die Luftfilteranlage ein Gehäuse (2) und ein in dem Gehäuse angeordnetes Filtersystem aufweist, wobei im Gehäuse ein mit dem Filtersystem verbundener Lufteinlass (3) für die Luft und ein mit dem Filtersystem verbundener Luftauslass (4) für die gereinigte Luft vorgesehen ist,
**dadurch gekennzeichnet, dass**
▪ das Filtersystem aus wenigstens zwei über eine Leitung (5) miteinander verbundenen Filterkomponenten (6, 7) besteht, wobei die erste Filterkomponente (6) ein konventioneller Filter zur Entfernung von üblichen Luftverunreinigungen ist und die zweite Filterkomponente (7) ein Filter zur Entfernung von gesundheitsschädlichen Kontaminationsstoffen ist,
▪ an der Leitung (5) zwischen der ersten Filterkomponente (6) und der zweiten Filterkomponente (7) eine Luftstromweiche (8) angeordnet ist, die eine erste Weichenstellung einnehmen kann, in der die von der ersten Filterkomponente (6) gereinigte Luft direkt zu dem Luftauslass (4) geleitetet wird, und die eine zweite Weichenstellung einnehmen kann, in der die von der ersten Filterkomponente (6) gereinigte Luft über die zweite Filterkomponente (7) zum Luftauslass (4) geleitet wird, und
▪ die Luftfilteranlage (1) einen Detektor (9) zur Detektion von gesundheitsschädlichen Kontaminationsstoffen in der Luft aufweist, wobei der Detektor (9) dann, wenn in der Luftein gesundheitsschädlicher Kontaminationsstoff vorliegt, ein Signal erzeugt, dass die Luftstromweiche (8) dazu veranlasst, die zweite Weichenstellung einzunehmen, sodass die von der ersten Filterkomponente (6) gereinigte Luft durch die zweite Filterkomponente (7) zum Luftauslass (4) geleitet wird.

2. Luftfilteranlage nach Anspruch 1, **dadurch gekennzeichnet, daß** der Detektor im Gehäuse am oder vor dem Lufteinlass, auf der Außenseite des Gehäuses oder an einem anderen Ort in einem Abstand vom Gehäuse angeordnet ist.

3. Luftfilteranlage nach einem der Ansprüche 1 und 2, **dadurch gekennzeichnet, daß** der Detektor das Signal an die Luftstromweiche über ein Kabel, über ein WLAN-Netzwerk, per Bluetooth oder per Funk überträgt.

4. Luftfilteranlage nach einem der Ansprüche 1 bis 3, **dadurch gekennzeichnet, daß** zusätzlich ein zweiter Detektor zur Detektion von gesundheitsschädlichen Kontaminationsstoffen in der Luft vorgesehen ist.

5. Luftfilteranlage nach einem der Ansprüche 1 bis 4, **dadurch gekennzeichnet, daß** das Filtersystem vor dem Lufteinlass oder zwischen dem Lufteinlass und der ersten Filterkomponente einen Staubabscheider und/oder einen Wasserabscheider aufweist.

6. Luftfilteranlage nach einem der Ansprüche 1 bis 5, **dadurch gekennzeichnet, daß** im Gehäuse für die erste und/oder zweite Filterkomponente jeweils Einschubschächte zum Austauschen von darin befindlichen gebrauchten ersten und/oder zweiten Filterkomponenten durch neue erste und/oder zweite Filterkomponenten vorgesehen sind.

7. Luftfilteranlage nach einem der Ansprüche 1 bis 6, **dadurch gekennzeichnet, daß**
▪ im Gehäuse ein Ventilator vorgesehen ist, der vom Lufteinlass in Richtung Luftauslass einen Luftstrom erzeugt,
▪ am Lufteinlass ein Lüftungsgitter, Staubabscheider oder Wasserabschieder vorgesehen ist,
▪ an der Oberseite des Gehäuses Transportösen angeordnet sind und/oder
▪ an der Unterseite des Gehäuses Standbeine oder Standkufen vorgesehen sind.

8. Luftfilteranlage nach einem der Ansprüche 1 bis 7, **dadurch gekennzeichnet, daß** wenigstens eine der Filterkomponenten ein hohlzylindrisches Filtergehäuse mit einem inneren gasdurchlässigen Zylindermantel und einem äußeren gasdurchlässigen Zylindermantel aufweist, von denen einer als Lufteinlass und der andere als Luftauslass dient, wobei optional zusätzlich zylindrische Trennwände vorgesehen sind, welche den Raum zwischen dem inneren und dem äußeren Zylindermantel in im Wesentlichen konzentrische, hohlzylindrische Kammern zur Aufnahme von Filtermaterial aufteilen.

9. Luftfilteranlage nach einem der Ansprüche 1 bis 8, **dadurch gekennzeichnet, daß** am Luftauslass ein Anschluss zum Anschließen am Lufteinlass eines mobilen Aufenthaltsraums vorgesehen ist.

10. Mobiler Aufenthaltsraum mit einem Lufteinlass für Umgebungsluft, **dadurch gekennzeichnet, daß** der Lufteinlass des Aufenthaltsraums mit einem Luftauslass einer Luftfilteranlage nach einem der vorangehenden Ansprüche verbunden ist.

11. Verfahren zum Versorgen eines mobilen Aufenthaltsraums mit gereinigter Luft, **dadurch gekennzeichnet, daß** man den Lufteinlass des Aufenthaltsraums mit einem Luftauslass einer Luftfilteranlage nach einem der Ansprüche 1 bis 9 verbindet und die Luftfilteranlage in Betrieb setzt, sodass diese durch Entfernung von Luftverunreinigungen aus der Umgebungsluft gereinigte Luft erzeugt und diese gereinigte Luft über die Verbindung mit dem Aufenthaltsraum dort bereitstellt.

## Claims

1. Mobile air filter system (1) for producing cleaned air by removing air impurities from the air, wherein the air filter system has a housing (2) and a filter system arranged in the housing, wherein an air inlet (3) connected to the filter system is provided in the housing for the air and an air outlet (4) connected to the filter system is provided for the cleaned air,
**characterized in that**
▪ the filter system consists of at least two filter components (6, 7) connected to one another via a conduit (5), the first filter component (6) being a conventional filter for removing common air impurities and the second filter component (7) being a filter for removing contaminants which are harmful to health,
▪ an air flow diverter (8) is arranged on the conduit (5) between the first filter component (6) and the second filter component (7), which can be in a first diverter position, in which the air cleaned by the first filter component (6) is conducted directly to the air outlet (4), and which can be in a second diverter position, in which the air cleaned by the first filter component (6) is conducted to the air outlet (4) via the second filter component (7), and
▪ the air filter system (1) has a detector (9) for detecting harmful contaminants in the air, wherein, if a harmful contaminant is present in the air, the detector (9) generates a signal which causes the air flow diverter (8) to take up the second diverter position, so that the air cleaned by the first filter component (6) is passed through the second filter component (7) to the air outlet (4).

2. Air filter system according to claim 1, **characterized in that** the detector is arranged in the housing at or in front of the air inlet, on the outside of the housing or at another location at a distance from the housing.

3. Air filter system according to one of claims 1 and 2, **characterized in that** the detector transmits the signal to the air flow diverter via a cable, via a WLAN network, via Bluetooth or via radio.

4. Air filter system according to one of claims 1 to 3, **characterized in that** in addition there is provided a second detector for detecting contaminants in the air which are harmful to health.

5. Air filter system according to one of claims 1 to 4, **characterized in that** the filter system has a dust separator and/or a water separator upstream of the air inlet or between the air inlet and the first filter component.

6. Air filter system according to one of claims 1 to 5, **characterized in that** slide-in shafts are provided in the housing for the first and/or second filter component in each case for replacing used first and/or second filter components located therein with new first and/or second filter components.

7. Air filter system according to one of claims 1 to 6, **characterized in that**
▪ a fan is provided in the housing, which generates an air flow from the air inlet in the direction of the air outlet,
▪ a ventilation grid, dust separator or water separator is provided at the air inlet,
▪ transport lugs are arranged on the top of the housing and/or
▪ legs or skids are provided on the underside of the housing.

8. Air filter system according to one of claims 1 to 7, **characterized in that** at least one of the filter components has a hollow-cylindrical filter housing with an inner gas-permeable cylindrical shell and an outer gas-permeable cylindrical shell, one of which serves as air inlet and the other as air outlet, wherein optionally additional cylindrical partition walls are provided which divide the space between the inner and the outer cylindrical shell into essentially concentric, hollow-cylindrical chambers for receiving filter material.

9. Air filter system according to one of claims 1 to 8, **characterized in that** at the air outlet a connection is provided for connection to the air inlet of a mobile occupiable space.

10. Mobile occupiable space with an air inlet for ambient air, **characterized in that** the air inlet of the occupiable space is connected to an air outlet of an air filter system according to one of the preceding claims.

11. Method for supplying a mobile occupiable space with cleaned air, **characterized in that** the air inlet of the occupiable space is connected to an air outlet of an air filter system according to one of claims 1 to 9 and the air filter system is put into operation so that it produces cleaned air by removing air impurities from the ambient air and provides this cleaned air there via the connection to the occupiable space.

## Revendications

1. Installation mobile de filtration d'air (1) destinée à produire de l'air épuré par élimination des impuretés présentes dans l'air, l'installation de filtration d'air comprenant un boîtier (2) et un système de filtration disposé dans le boîtier, une entrée d'air (3) pour l'air, reliée au système de filtration, et une sortie d'air (4) pour l'air épuré, reliée au système de filtration, étant prévues dans le boîtier,
**caractérisée en ce que**:
• le système de filtration est constitué d'au moins deux composants filtrants (6, 7) reliés entre eux par un conduit (5), le premier composant filtrant (6) étant un filtre conventionnel destiné à éliminer les impuretés habituelles de l'air et le second composant filtrant (7) étant un filtre destiné à éliminer les substances contaminantes nocives pour la santé;
• un dispositif de dérivation du flux d'air (8) est disposé sur le conduit (5), entre le premier composant filtrant (6) et le second composant filtrant (7), ledit dispositif pouvant adopter une première position de dérivation, dans laquelle l'air épuré par le premier composant filtrant (6) est acheminé directement vers la sortie d'air (4), et une seconde position de dérivation, dans laquelle l'air épuré par le premier composant filtrant (6) est acheminé vers la sortie d'air (4) en passant par le second composant filtrant (7); et
• l'installation de filtration d'air (1) comprend un détecteur (9) destiné à détecter des substances contaminantes nocives pour la santé dans l'air, le détecteur (9) produisant, lorsqu'une substance contaminante nocive pour la santé est présente dans l'air, un signal qui amène le dispositif de dérivation du flux d'air (8) à adopter la seconde position de dérivation, de sorte que l'air épuré par le premier composant filtrant (6) est acheminé vers la sortie d'air (4) à travers le second composant filtrant (7).

2. Installation de filtration d'air selon la revendication 1, **caractérisée en ce que** le détecteur est disposé dans le boîtier, au niveau de l'entrée d'air ou en amont de celle-ci, sur la face extérieure du boîtier ou en un autre emplacement à distance du boîtier.

3. Installation de filtration d'air selon l'une des revendications 1 et 2, **caractérisée en ce que** le détecteur transmet le signal au dispositif de dérivation du flux d'air par un câble, par un réseau WLAN, par Bluetooth ou par liaison radio.

4. Installation de filtration d'air selon l'une des revendications 1 à 3, **caractérisée en ce qu'**un second détecteur destiné à détecter des substances contaminantes nocives pour la santé dans l'air est prévu en supplément.

5. Installation de filtration d'air selon l'une des revendications 1 à 4, **caractérisée en ce que** le système de filtration comprend un séparateur de poussière et/ou un séparateur d'eau en amont de l'entrée d'air ou entre l'entrée d'air et le premier composant filtrant.

6. Installation de filtration d'air selon l'une des revendications 1 à 5, **caractérisée en ce que** des logements d'insertion respectifs sont prévus dans le boîtier pour le premier et/ou le second composant filtrant, afin de remplacer les premiers et/ou seconds composants filtrants usagés qui s'y trouvent par de nouveaux premiers et/ou seconds composants filtrants.

7. Installation de filtration d'air selon l'une des revendications 1 à 6, **caractérisée en ce que**:
• un ventilateur est prévu dans le boîtier, lequel génère un flux d'air de l'entrée d'air vers la sortie d'air;
• une grille de ventilation, un séparateur de poussière ou un séparateur d'eau est prévu au niveau de l'entrée d'air;
• des anneaux de levage sont disposés sur la face supérieure du boîtier; et/ou
• des pieds de support ou des patins de support sont prévus sur la face inférieure du boîtier.

8. Installation de filtration d'air selon l'une des revendications 1 à 7, **caractérisée en ce qu'**au moins l'un des composants filtrants comprend un boîtier de filtre cylindrique creux présentant une paroi cylindrique intérieure perméable aux gaz et une paroi cylindrique extérieure perméable aux gaz, dont l'une sert d'entrée d'air et l'autre de sortie d'air, des cloisons cylindriques étant éventuellement prévues en supplément pour subdiviser l'espace entre les parois cylindriques intérieure et extérieure en chambres cylindriques creuses sensiblement concentriques destinées à recevoir un matériau filtrant.

9. Installation de filtration d'air selon l'une des revendications 1 à 8, **caractérisée en ce qu'**un raccord destiné à être raccordé à l'entrée d'air d'un espace occupable mobile est prévu au niveau de la sortie d'air.

10. Espace occupable mobile comprenant une entrée d'air pour l'air ambiant, **caractérisé en ce que** l'entrée d'air de l'espace occupable est reliée à une sortie d'air d'une installation de filtration d'air selon l'une des revendications précédentes.

11. Procédé d'alimentation d'un espace occupable mobile en air épuré, **caractérisé en ce que** l'entrée d'air de l'espace occupable est reliée à une sortie d'air d'une installation de filtration d'air selon l'une des revendications 1 à 9 et **en ce que** l'installation de filtration d'air est mise en fonctionnement, de sorte qu'elle produit de l'air épuré par élimination des impuretés présentes dans l'air ambiant et fournit cet air épuré à l'espace occupable par l'intermédiaire de ladite liaison.
